# EUROPEAN PATENT APPLICATION

(11) **EP 2 505 959 A1**
(43) Date of publication of application: **03.10.2012**
(21) Application number: 11250394.1
(22) Date of filing: 28.03.2011
(51) Int. Cl.: G01B 21/04

(54) **Coordinate positioning machine controller**

(71) Applicant: Renishaw plc, Gloucestershire GL12 8JR (GB)
(72) Inventor: The designation of the inventor has not yet been filed
(74) Representative: Rolfe, Edward William

(57) **Abstract**

A coordinate positioning apparatus comprising; a coordinate positioning machine having a measuring probe for interacting with an artefact to obtain measurement data regarding the artefact. The measuring probe and artefact are moveable relative to each other in at least one machine degree of freedom. The apparatus further comprises a hand-held device, moveable in free-space in a plurality of device degrees of freedom, for controlling movement of the measurement probe relative to the artefact. The hand-held device comprises at least one motion sensor for sensing movement of the hand-held device in free-space, The apparatus is configured such that the relative movement of the measurement probe and artefact is controlled by said movement of the hand-held device in free-space.

## Description

This invention relates to a controller for a coordinate positioning machine, such as a coordinate measuring machine, a machine tool or the like, and a method of controlling a coordinate positioning machine.

Coordinate positioning machines, such as coordinate measuring machines (CMMs), are known for inspecting artefacts during and/or after manufacture. Typically, an inspection tool such as measurement probe is mounted on the coordinate positioning machine and driven around the artefact via the machine to take a number of measurements. For example, a contact probe loaded on the machine can be driven by the machine to come into contact with the artefact at a plurality of different points around the artefact so as to take measurements. The movement of the measurement probe can be controlled automatically via a computer which controls the movement of the machine's axes according to an inspection program. This is useful when a plurality ofpoints is to be measured on a known object because the measurement probe can be moved quickly and accurately under the automatic control of the computer.

However, it is not always appropriate for the measurement probe to be moved automatically under the control of a computer. For instance, during initial part-alignment of the artefact on the coordinate positioning machine, and/or when inspecting unknown objects, it can be advantageous to move the measurement probe manually. Indeed, it is known to control the movement of a measurement probe manually, for instance via a joystick associated with the machine. The operator uses the joystick to move the machine's axes so as to thereby move the measurement probe and take measurement points about the artefact. If desired, certain positions of the measurement probe can be recorded and reused later on, thereby enabling the programming of measurement paths.

The present invention provides an improved device for the manual control of a coordinate positioning machine. In particular, the present invention relates to a device for a coordinate positioning machine that enables the axes of the machine to be controlled via movement of the device in free-space, for example via the use of motion sensors within the device.

According to a first aspect of the invention there is provided a coordinate positioning apparatus comprising: a coordinate positioning machine having a measuring probe for interacting with an artefact to obtain measurement data regarding the artefact, the measuring probe and artefact being moveable relative to each other in at least one machine degree of freedom; and a device (e.g. a hand-held device), moveable in free-space in a plurality of device degrees of freedom, for controlling movement of the measurement probe relative to the artefact, in which the device comprises at least one motion sensor for sensing movement of the device in free-space, in which the apparatus is configured such that the relative movement of the measurement probe and artefact is controlled by said movement of the device in free-space.

Controlling the motion of a coordinate positioning machine by moving a device in free-space provides a less cumbersome and awkward, and overall more intuitive way of interacting with the coordinate measuring machine compared to a joystick. In particular, due to the relatively unrestricted range of motion available, and greater versatility in available input gestures, it can facilitate greater control of the movement of the measuring probe, leading to fewer incorrect points being measured. This in turn reduces inspection times, thereby improving throughput.

Furthermore, the manual operation of a coordinate positioning machine is a skilled job. Indeed, the coordinate positioning machine is very expensive and so too can be the artefacts being measured. It is therefore important to avoid collisions between the measurement probe and artefact which can cause damage to the coordinate positioning machine or artefact. Furthermore, it is often important that particular points on the artefact are measured. As a result it can take a significant amount of time and resources to train an operator to become proficient at his/her job. It has been found that it can be much easier to control a coordinate positioning apparatus with a motion sensitive device according to the present invention, thereby reducing training time and resources. It has even been found easy enough for novices to use to measure artefacts quickly and intuitively, thereby facilitating such novice operators to perform ad-hoc measurements themselves, rather than having to wait for a trained operator to perform the measurement.

As the device is one that is to be held and manipulated by the hands of an operator, such a device can be termed as a "hand-held" device.

As will be understood, suitable motion sensors for sensing motion of the hand-held device include those typically found in inertial measurement units, such as electronic compasses position tracking sensors, and inertia sensors for sensing accelerations of the hand-held device. As will be understood, such accelerations include linear and/or angular accelerations. Suitable sensors include accelerometers and/or gyroscopes.

Accordingly, as will be understood, the apparatus can be configured such that changes to the relative movement of the measurement probe and artefact can be controlled by said movement of the hand-held device in free-space. In other words, movement of the hand-held device can cause a change in the relative movement of the measurement probe and artefact. This could for instance be a change in velocity and/or direction of the relative movement of the measurement probe and artefact. For example, this could be to cause relative movement of the measurement probe and artefact from an otherwise stationary configuration, or for example to stop relative movement of the measurement probe and artefact.

The relative movement of the measurement probe and artefact can therefore be controlled by movement of the hand-held device relative to the coordinate positioning machine. In other words, the relative movement of the measurement probe and artefact can be controlled by changing of the position and/or orientation of the hand-held device in free-space, for example relative to the coordinate positioning machine. Accordingly, the apparatus can be configured to move the measurement probe and artefact in response to said movement of the hand-held device in free-space.

The hand-held device could communicate with the coordinate positioning machine via one or more wired links. Preferably, the hand-held device is a wireless hand-held device. A wireless hand-held device enables an operator to operate at any position around the artefact/coordinate positioning machine free from being physically tied to another part of the coordinate positioning apparatus. This is not the case with known wired joysticks as the operator becomes tethered within a given distance to the coordinate positioning machine's controller (usually sited near the application programming software). Having a wireless hand-held device according to the present invention is particularly useful when the part is large, the coordinate positioning machine's working volume is large, and/or features to be measured are small or are obscured from view when the operator sits at the coordinate positioning machine's controller to operate the programming software

Preferably the measuring probe and artefact are moveable relative to each other in at least one linear machine degree of freedom, more preferably at least two orthogonal linear machine degrees of freedom, especially preferably at least three orthogonal linear machine degrees of freedom.

The apparatus could be configured such that the relative movement of the measurement probe and artefact in a linear degree of freedom is controlled by changing the position of the hand-held device in a linear degree of freedom. Preferably, the apparatus is configured such that the relative movement of the measurement probe and artefact in a linear degree of freedom is controlled by changing the orientation of the hand-held device, i.e. moving the hand-held device in a rotational degree of freedom. Accordingly, the apparatus could be configured such that movement of the hand-held device in a rotational degree of freedom controls relative movement of the measurement probe and artefact in a linear degree of freedom.

Each of the linear and/or rotational degrees of freedom in which the hand-held device is freely moveable are hereinafter referred to as device degrees of freedom. As will be understood, the hand-held device is preferably freely movable in three orthogonal linear degrees of freedom, and also freely rotatable in three degrees of freedom (i.e. about three orthogonal axes). A given device degree of freedom can be tied (i.e. logically or conceptually tied, not physically tied) to a particular machine degree of freedom. In other-words a given device degree of freedom can be mapped or correlated to a particular machine degree of freedom. Accordingly, movement of the hand-held device in that given device degree of freedom can control the relative movement of the measurement probe and artefact in that particular machine degree of freedom. In particular, the apparatus can be configured such that movement in a given device degree of freedom controls the relative movement of the measurement probe and artefact in only the particular machine degree of freedom that the given device degree of freedom is tied to.

Preferably, the machine degree of freedom that the given device degree of freedom is tied to can be changed. Preferably, the machine degree of freedom that a given device degree of freedom is tied to changes automatically depending on the orientation of the hand-held device, for example the orientation of the hand-held device relative to the coordinate positioning machine. This can avoid the operator having to tell the apparatus to switch the ties between the hand-held device and machine degrees of freedom. The apparatus could be configured such that the machine degree of freedom that the given device of freedom is tied to changes when it is determined that the hand-held device has rotated though a predetermined angle about a vertical axis (relative to earth). For example, the apparatus could be configured such that the machine degree of freedom that the given device of freedom is tied to changes when it is determined that the hand-held device has rotated though at least 25°, more preferably at least 35°, especially preferably at least 45° about a vertical axis. Optionally, the orientation of the hand-held device can be determined via the at least one motion sensor. Preferably, the hand-held device comprises an electronic compass, for example a magnetometer, the output of which is used to determine the orientation of the hand-held device.

Preferably, the hand-held device comprises at least one activation area. Preferably, the apparatus is configured such that movement of the hand-held device in free-space controls the relative movement of the measurement probe and artefact only when the hand-held device senses that it is being touched in at least one "activation area" on the hand-held device. Accordingly, in this case, touching the at least one activation area can activate the controlling of the relative movement of the measurement probe and artefact via the movement of the hand-held device. The hand-held device can comprise at least one tactile sensor. The tactile sensor can provide the activation area Accordingly, the apparatus can be configured such that movement of the hand-held device in free-space controls the relative movement of the measurement probe and artefact only when the at least one tactile sensor senses that it is being touched. Optionally, the apparatus can be configured such that movement of the hand-held device in free-space controls the relative movement of the measurement probe and artefact only when the hand-held device senses that it is being touched in at least two separate activation areas on the hand-held device. Such activation areas could be provided by at least two tactile sensors, or for example one tactile sensor that provides two discrete activation areas. Preferably, the apparatus is configured such that movement of the hand-held device in free-space controls the relative movement of the measurement probe and artefact only when the at least one tactile sensor senses that at least two activation areas are being touched.

Suitable tactile sensors are those capable of sensing and/or being manipulated by the operator physically touching/contacting the sensor, including for example switches, buttons and/or photodetectors. Preferably, at least one of the at least one tactile sensor is a touch-sensitive area. As will be understood, various technologies exist for implementing touch-sensitive areas, such as capacitive, resistance and surface acoustic wave (SAW). The touch-sensitive area could be provided, for instance, by a touchpad.

Preferably, the apparatus is configured such that an operator can control relative movement of the measurement probe and artefact in at least one machine degree of freedom via a tactile sensor, for instance via moving their finger(s) or thumb over the tactile sensor. The same tactile sensor could also provide the activation area. Optionally, the hand-held device could be configured such that the at least one tactile sensor provides a first area which can be used by the operator to control relative movement of the measurement probe and artefact in at least one machine degree of freedom (hereinafter referred to as a "joystick area"), and a second area which cannot be used to control such movement. Accordingly, the second area can be merely used as an activation area. The first area (the joystick area) could also be an activation area. The hand-held device could be configured such that at least two tactile sensitive regions are provided, each of which provide a first area which can be used by the operator to control relative movement of the measurement probe and artefact in at least one machine degree of freedom (i.e. a joystick area), and a second area which is merely used as an activation area.

The apparatus can be configured such that the machine degree of freedom controlled via a tactile sensor is the same as that controlled by movement of the hand-held device in free-space. Optionally, the apparatus can be configured such that the machine degree of freedom controlled via a tactile sensor is different to the machine degree of freedom controlled by movement of the hand-held device in free-space. For example, the movement of the hand-held device could be configured to control relative movement of the measurement device and artefact in at least one linear degree of freedom The tactile sensor could be used to control linear movement of the measurement probe and artefact in an orthogonal linear degree of freedom.

The coordinate positioning machine could be configured such that the measuring probe and artefact can be moved relative to each other in at least one rotational degree of freedom. The coordinate positioning machine could be configured such that the measuring probe and artefact can be moved relative to each other in at least two rotational degrees of freedom, for example about two orthogonal axes, optionally at least three rotational degrees of freedom, for example about three orthogonal axes The apparatus could be configured such that movement in the at least one (optionally at least two, and further optionally at least three) rotational degree(s) of freedom can be controlled via the at least one tactile sensor.

Optionally, the apparatus can be configured such that the relative movement of the measurement probe and artefact in said at least one (optionally at least two, and further optionally at least three) rotational degree(s) of freedom is controlled by movement of the hand-held device in free-space.

The apparatus could be configured such that the hand-held device can simultaneously control relative movement of the measurement probe and artefact in at least one (optionally at least two, and further optionally at least three) linear degree(s) of freedom and at least one (optionally at least two, and further optionally at least three) rotational degree(s) of freedom. The apparatus could be configured such that the relative movement of the measurement probe and artefact in the at least one (optionally at least two and further optionally at least three) linear degree(s) of freedom can be controlled via movement of the hand-held device in free-space. Furthermore, optionally, the apparatus could be configured such that relative movement of the measurement probe and artefact in the at least one (optionally at least two, and further optionally at least three) rotational degree(s) of freedom can be controlled via the at least one tactile sensor. Such simultaneous control of both the linear and rotational axes can avoid the need for the operator to switch between different operating modes. As will be understood, various combinations of use of the at least one tactile sensor and movement of the hand-held device for controlling the relative movement of the measurement probe and artefact are possible. For instance, the relative movement of the measurement probe and artefact in at least one of the linear degree of freedom and in at least one rotational degree of freedom can both be controlled via movement of the hand-held device in free-space. Preferably, the relative movement of the measurement probe and artefact in two orthogonal linear degrees of freedom (e.g. in a generally horizontal plane) can be controlled via movement of the hand-held device in free-space (e.g. via respective rotation of the hand-held device about two orthogonal axes), and movement of the measurement probe and artefact in a third orthogonal linear degree of freedom (e.g. in a vertical dimension) can be controlled via at least one tactile sensor.

The hand-held device can comprise at least one screen for displaying information to the operator, for example information regarding the coordinate positioning apparatus. The apparatus can be configured such that data concerning the measurement probe is displayed on the at least one screen. In particular, the apparatus can be configured such that data relating to interactions between the measurement probe and artefact is displayed on the at least one screen.

The hand-held device can be configured to receive data regarding the coordinate positioning apparatus (for example, data concerning the measurement probe and more particularly for example, data relating to interactions between the measurement probe) and process such data for displaying information regarding the coordinate positioning apparatus on the at least one screen. Accordingly, the hand-held device can comprise at least one processor configured to process such data for displaying on the at least one screen.

Preferably, the apparatus is configured such that the operator can interact with the hand-held device so as to input and/or obtain information regarding a measurement operation. The coordinate positioning apparatus may require input from the operator regarding measurement data obtained during a measurement operation. For example, the coordinate positioning apparatus may be configured to automatically determine the type of feature being measured. In this case, the coordinate positioning apparatus could be configured to require the operator to confirm the type of feature measured, e.g. whether it is a circle or plane. Accordingly, preferably the apparatus (for example the hand-held device) comprises at least one interaction-input device via which the operator can interact with the hand-held device so as to input and/or obtain information regarding a measurement operation.

The apparatus can be configured such that the operator can use the hand-held device to program a measurement operation, e.g. by confirming way-points to be used in a measurement operation. Accordingly, preferably the apparatus (e.g. the hand-held device) comprises at least one program-input mechanism via which the operator can interact with the hand-held device so as to program information regarding a measurement operation.

Optionally, the apparatus is configured such that operator can interact with the hand-held device (e.g. interrogate the hand-held device) so as to obtain information regarding the coordinate positioning apparatus, for example regarding the measurement probe, optionally for example regarding measurement points obtained via the measurement probe, further optionally for example regarding features measured by the measurement probe. For instance, the apparatus could be configured such that the operator can retrieve measurement information regarding artefact features of the measurement, for example the size of a feature, and/or the distance between two or more features. Accordingly, preferably the apparatus (e.g. the hand-held device) comprises at least one interrogation-input mechanism via which the operator can interrogate the hand-held device for information regarding the coordinate positioning apparatus, for example regarding the measurement probe, optionally for example regarding measurement points obtained via the measurement probe, further optionally for example regarding features measured by the measurement probe. Preferably, the hand-held device is configured such that the user can generate a report regarding such above mentioned information.

The hand-held device can comprise the at least one interaction-input mechanism, and/or at least one program-input mechanism and/or at least one interrogation-input mechanism. Two or more of the above mentioned input mechanisms could be provided by a common, e.g. the same, input device. Any of the above mentioned input mechanisms could be an at least one tactile sensor, for example a button, keyboard, touch-sensitive area such as a touchpad, joystick, and/or trackball provided on the hand-held device. Optionally, in embodiments in which the screen is a touch-screen, at least one of the above mentioned input mechanisms is the touch-screen interface on the hand-held device. Any or all of the above mentioned input mechanisms, the activation area, and the at least one tactile sensor via which relative movement of the measurement probe and artefact can be controlled, can be provided by a common, e.g. the same, input device (for example, a touch-screen device).

The apparatus could be configured to display a graphical representation of at least one measured feature of the artefact on the at least one screen. The graphical representation could be a three-dimensional representation. Optionally, the apparatus is configured such that the operator can manipulate the view of the graphical representation. For instance, as described in more detail below, the at least one screen could be a touch-screen and so the apparatus could be configured such that the operator can manipulate the view of the graphical representation via the touch-screen. The graphical representation can be generated from data obtained via the measurement probe. The hand-held device could process data from the coordinate positioning machine to generate the graphical representation. Optionally, the hand-held device could receive graphical representation data from another part ofthe coordinate positioning apparatus, for example a Controller of the coordinate positioning machine, or another processor device such as a desktop computer (for example as described in more detail below). Optionally, the apparatus could be configured to display on the at least one screen a graphical representation of a pre-generated Computer Aided Design (CAD) or Computer Aided Manufacture (CAM) model of the artefact. This could be instead of or as well as the graphical representation of the measured feature.

Accordingly, preferably the hand-held device provides a graphical user interface (GUI) via which the operator can perform at least one of the above mentioned capabilities.

The screen can comprise at least one touch-screen. This can enable the operator to interact with the software on the hand-held device without the use of a hardware keyboard and/or mouse/trackball. The at least one activation area can be provided by the at least one touch-screen. Accordingly, the touch-screen can provide the above mentioned tactile sensor.

The coordinate positioning apparatus can be configured such that the measurement probe and artefact move relative to each other at a predetermined speed in response to a change in position and/or orientation of the hand-held device in free-space, for example from its original position and/or orientation, especially for example from its original activated position and/or orientation (e.g. in line with the above description, the position and/or orientation at which the at least one activation area is touched). The predetermined speed could be the same regardless of the extent of the change in position and/or orientation of the hand-held device in free-space. Preferably, the speed at which the measurement probe and artefact move relative to each other depends on the magnitude of the change in position and/or orientation of the hand-held device in free-space, for example from its original position and/or orientation, especially for example from its original activated position and/or orientation. The relationship between magnitude of change in position and/or orientation of the hand-held device in free-space to speed could vary in discrete steps. Preferably, the relationship varies smoothly. Preferably, the relationship is non-linear, and in particular preferably the rate of increase speed progressively increases with increases in the magnitude of change in position and/or orientation of the hand-held device in free-space.

Accordingly, the coordinate positioning apparatus can be configured to convert movement (e.g. changes in the position and/or orientation) of the hand-held device into data suitable for use in instructing relative movement of the measurement probe and artefact at a speed according to at least one predetermined function. The at least one predetermined function could be a linear function. Preferably, the at least one predetermined function is a non-linear function. In particular, preferably the non-linear function is a curved function. Preferably, the curve is relatively shallow (i.e. changes slowly) for small extents of movements of the hand-held device and progressively steepens as the extent of movement of the hand-held device increases (e.g. as the change in position and/or orientation of the hand-held device from its original position and/or orientation (especially for example from its original activated position and/or orientation) increases). Accordingly, the non-linear function could be configured such that rate of increase in speed of relative movement between the measurement probe and artefact increases with increases in the extent of movement of the hand-held device. For example, the function could be configured such that the rate of increase in speed of relative movement between the measurement probe and artefact increases exponentially with increases in the extent of movement of the hand-held device.

The hand-held device itself could be configured to process the output from the at least one motion sensor to generate data suitable for use in instructing relative movement of the measurement probe. Optionally, a coordinate positioning machine controller or other third party device (both described in more detail below) could receive and process output from the hand-held device's motion sensor and generate data suitable for use in instructing relative movement of the measurement probe.

The function for converting movement ofthe hand-held device to the relative movement of the measurement probe and artefact could be changeable. Accordingly, the coordinate positioning apparatus could be configured such that the operator can select the appropriate function to use. For example, a slow function and a fast function could be provided, which are configured such that for the same extent of movement of the hand-held device away from its original position and/or orientation (e.g. its original activated position and/or orientation) the fast function effects faster relative movement of the measurement probe and artefact than the slow function. Optionally, at least one variable ofthe function could be changeable so as to change the way in which movement of the hand-held device is converted into data for instructing the relative movement of the measurement probe and artefact. Optionally, the coordinate positioning apparatus could be configured with more than one selectable function for mapping movement of the hand-held device to relative movement of the measurement probe and artefact.

As will be understood, the coordinate positioning machine could comprise a stationary platform on which the artefact can be located. The measurement probe could be configured to move relative to the artefact. Optionally, the coordinate positioning machine comprises a platform on which the artefact can be located that can be moved in at least one linear degree of freedom and/or at least one rotational degree of freedom relative to the measurement probe.

The coordinate positioning machine can comprise a controller. The hand-held device could communicate with the controller, which in turn controls motors on the coordinate positioning machine to effect relative movement of the measurement probe and artefact. The hand-held device could communicate directly with the controller, or via a third party device, for instance, a processing device, such as a bespoke or general purpose computer.

The measurement probe can be a contact probe. Contact probes normally comprise a stylus attached to and extending from a probe body. The stylus can comprise a tip for contacting a workpiece. Contact probes include rigid stylus probes and stylus deflection probes. Stylus deflection probes operate by detecting the deflection of the stylus when it is driven against a workpiece. Componentry for detecting deflection of the stylus is typically housed within the probe body. The stylus deflection probe can be a "dual state" probe in which the probe can determine when the stylus is seated or deflected. Deflection could be detected by the breakage of contacts in the probe body caused by the stylus tilting relative to the probe body. For example, such a probe is disclosed in US 4270275, the entire content of which is incorporated into this specification by this reference.

The stylus deflection probe can be an analogue probe in which the probe can determine the extent of the deflection ofthe stylus. The analogue stylus deflection probe can be an optical stylus deflection probe. For example, such a probe is disclosed in published International patent application no. PCT/GB00/01303 under publication no. WO 00/60310, the entire content of which is incorporated into this specification by this reference.

The measurement probe can be a non-contact probe. Such a probe can be used to measure a workpiece without contacting the workpiece. Non-contact probes include optical probes, laser scanning probes, capacitive probe and inductive probes, such as those disclosed in US 4,750,835 and US 5,270,664, the contents of which are incorporated into this specification by these references.

The non-contact measurement probe can comprise a vision probe, also known as a camera (or video) probe. Such probes obtain images of the artefact being inspected, from which measurement information can be obtained. In this case, and in embodiments in which the hand-held device comprises at least one screen, the apparatus can be configured such that the hand-held device can display on its at least one screen at least one image obtained from the vision probe. In particular, the apparatus can be configured such that the hand-held device displays on its screen a plurality of images obtained from the vision probe, for instance a series of images, for example a video-stream from the vision probe, more particularly a live video-stream from the vision probe. The apparatus could be configured such that properties of the vision probe can be changed by the operator via the hand-held device. For instance, the apparatus could be configured such that at least one of the focus (e.g. the focal plane) and exposure settings can be controlled via the hand-held device. If the vision probe comprises an illumination device, then the apparatus could also be configured such that the illumination level of such a device can be controlled via the hand-held device. Accordingly, the hand-held device could comprise a user-operable vision probe property changer via which properties of the vision probe can be changed by the operator via the hand-held device. The user-operable vision probe property changer could comprise at least one tactile sensor, for example a scroll wheel. Optionally, in embodiments in which the screen is a touch-screen, the user-operable vision probe property changer can be provided by the touch-screen interface.

According to a second aspect ofthe invention there is provided a method of operating a co-ordinate positioning apparatus comprising a coordinate positioning machine having a measuring probe for interacting with an artefact to obtain measurement data regarding the artefact, and a hand-held device via which an operator can control the relative movement of the measuring probe and artefact, the method comprising: moving the hand-held device in free-space; and the measuring probe and artefact moving relative to each other in response thereto.

According to a third aspect of the invention there is provided a hand-held device configured for use with the above described apparatus or method. In particular, there is provided a hand-held device, movable in free-space in a plurality of device degrees of freedom, comprising at least one motion-sensor, and which is configured to determine and output instructions for effecting relative movement of a measuring probe and an artefact on a coordinate positioning apparatus, based on the output of said at least one motion-sensor.

According to a fourth aspect of the invention there is provided a computer implemented method comprising: receiving from a hand-held device data representing movement of the hand-held device in free-space; generating instructions for moving a measurement probe of a coordinate positioning machine relative to an artefact based on said data; and issuing said instructions to the machine for effecting movement of the measurement probe in accordance with said instructions.

According to a fifth aspect of the invention there is provided a computer implemented method for controlling the relative movement of a measuring probe and an artefact on a coordinate positioning apparatus, comprising receiving the output from at least one motion sensor in a hand-held device, processing said output to generate instructions for effecting movement of a part of a coordinate positioning apparatus, and outputting said instructions to a controller of the coordinate positioning apparatus. According to a further aspect there is provided a hand-held device having at least one motion sensor, at least one processor and at least one memory device comprising computer program instructions which when executed perform the above described method. According to a yet further aspect, there is provided a computer readable medium, comprising computer program instructions which when executed on a hand-held device comprising at least one motion sensor, performs the above described method.

According to another aspect of the invention, there is provided a coordinate positioning apparatus comprising: a coordinate positioning machine having a measuring probe for interacting with an artefact to obtain measurement data regarding the artefact, the measuring probe and artefact being moveable relative to each other in at least one machine degree of freedom; and a device comprising an input mechanism for directly controlling movement of the measurement probe relative to the artefact, via manipulation of the, or a part of, the hand-held device, and a user interface via which an operator can input and/or obtain information regarding a measurement operation. Likewise, there is also provided a device comprising an input mechanism for directly controlling movement of a measurement probe relative to an artefact on a coordinate positioning apparatus via manipulation of the, or a part of, the hand-held device, and a user interface via which an operator can input and/or obtain information regarding a measurement operation.

Movement can be directly controlled via, for example, at least one a physical joystick, track ball, tactile sensor, touch-pad, touch-screen, or motion sensor (e.g. thereby so as to all control via movement of the hand-held device in free-space). As will be understood, direct control enables the user to control the movement of the measuring probe and artefact in real-time, e.g movement of the measuring probe and artefact occurs substantially immediately in response to manipulation of the, or a part of the, hand-held device. In other words, the hand-held device can be used for control over the current motion of the measuring probe and artefact.

As will be understood, the statements made above in connection with the other above described inventions can also be applicable to this invention, and vice versa. Accordingly, for instance, the user interface could comprise at least one screen for displaying information to the operator, for example information regarding the coordinate positioning apparatus. The apparatus can be configured such that data concerning the measurement probe is displayed on the at least one screen. In particular, the apparatus can be configured such that data relating to interactions between the measurement probe and artefact is displayed on the at least one screen.

The hand-held device can be configured to receive data regarding the coordinate positioning apparatus (for example, data concerning the measurement probe and more particularly for example, data relating to interactions between the measurement probe) and process such data for displaying information regarding the coordinate positioning apparatus on the at least one screen.

Preferably, the apparatus is configured such that the operator can interact with the hand-held device so as to input and/or obtain information regarding a measurement operation. As described above, the hand-held device can comprise at least one interaction-input device via which the operator can interact with the hand-held device so as to input and/or obtain information regarding a measurement operation.

As described above, the apparatus can be configured such that the operator can use the hand-held device to program a measurement operation, e.g. by confirming way-points to be used in a measurement operation. Accordingly, preferably the apparatus (e.g. the hand-held device) comprises at least one program-input mechanism via which the operator can interact with the hand-held device so as to program information regarding a measurement operation.

As described above, the apparatus can be configured such that operator can interact with the hand-held device (e.g. interrogate the hand-held device) so as to obtain information regarding the coordinate positioning apparatus, for example regarding the measurement probe, optionally for example regarding measurement points obtained via the measurement probe, further optionally for example regarding features measured by the measurement probe. For instance, the apparatus could be configured such that the operator can retrieve measurement information regarding artefact features of the measurement, for example the size of a feature, and/or the distance between two or more features. Accordingly, preferably the apparatus (e.g. the hand-held device) comprises at least one interrogation-input mechanism via which the operator can interrogate the hand-held device for information regarding the coordinate positioning apparatus, for example regarding the measurement probe, optionally for example regarding measurement points obtained via the measurement probe, further optionally for example regarding features measured by the measurement probe.

As described above, the hand-held device can comprise the at least one interaction-input mechanism, and/or at least one program-input mechanism and/or at least one interrogation-input mechanism.

In line with the above description, the apparatus could be configured to display a graphical representation (e.g. a three-dimensional representation) of at least one measured feature of the artefact on the at least one screen. As also described above, the apparatus is configured such that the operator can manipulate the view of the graphical representation.

Accordingly, preferably the hand-held device comprises a graphical user interface (GUI) via which the operator can perform at least one of the above mentioned capabilities.

In line with the above description, the screen can comprise at least one touch-screen.

Embodiments of the invention will now be described with reference to the accompanying drawings in which:
Figure 1 is a schematic system hardware diagram according to an embodiment of the invention;
Figure 2 is a view of a hand-held device according to an embodiment of the invention;
Figures 3a and 3b illustrate how, according to one embodiment of the invention, movement of the hand-held device is mapped onto movement of the measuring probe;
Figures 4a, 4b and 4c are screenshots of a hand-held device's display according to further embodiments of the invention;
Figure 5 is schematic software architecture diagram according to an embodiment of the invention;
Figure 6 is a schematic process diagram illustrating the steps involved in controlling the movement of the probe via the hand-held device according to an embodiment of the invention; and
Figure 7 is a schematic process diagram illustrating the steps involved in feeding data back from the coordinate measuring machine to the hand-held device according to an embodiment of the invention.

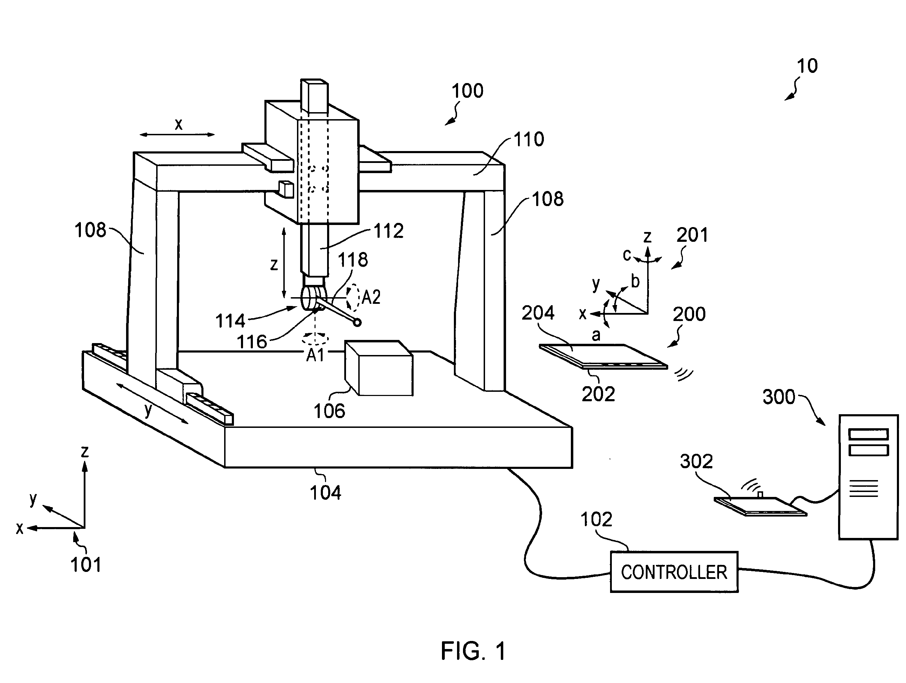

Referring to Figure 1, there is shown a coordinate positioning apparatus 10 according to an embodiment of the invention, comprising a coordinate positioning machine in the form of a coordinate measuring machine ("CMM") 100, a hand-held device in the form of a tablet computer 200, a desktop computer 300 and a controller 102. The CMM 100 comprises a platform 104 onto which an object 106 to be inspected can be placed and a gantry comprising two upright members 108 and a cross-member 110 extending between the tops of the two upright members 108. The gantry can be moved along the platform in one linear dimension (in this case the labelled the "y" axis) via motors (not shown) under the control of the controller 102. The cross-member 110 carries a quill 112 which can be moved along the length of the cross-member (in this case labelled the "x" axis) and also perpendicularly to the y and x axes (i.e. along the "z" axis as shown) via motors (not shown) under the control of the controller 102. The quill 112 carries a head 114 which in turn carries a probe 116 which has a stylus 118. The head 114 is articulated in that it has bearings and motors (not shown) that facilitate rotation of the probe 116 and hence stylus 118 about first and second orthogonal axes (shown as "A1" and "A2" in Figure 1) under the control of the controller 102. The CMM comprises position encoders (not shown) which report the position of the gantry, the quill and the probe in each of the three linear and two rotational degrees of freedom to the controller 102.

In the described embodiment, the coordinate positioning machine is a serial CMM (i.e. in which the three linear degrees of freedom is provided by three independent, orthogonal axes of motion). However, as will be understood, the invention can also be used to control the movement of other types of coordinate positioning machines, such parallel CMMs, robot arms or the like. The invention can also be used with not just dedicated CMMs, but also coordinate positioning machines such as machine tools. Furthermore, as will be understood, the invention is also suitable for use with Cartesian and non-Cartesian positioning machines, such as polar and spherical coordinate positioning machines.

In the embodiment described, the probe 116 is a contact touch-trigger probe which issues a signal when contact is detected between the probe 116 (and in particular the stylus 118 (and more particularly the stylus tip)) and the object 106. An example of such a probe is described in more detail in GB 1445977. As will be understood, the probe 116 need not necessarily be touch-trigger probe. For instance, it could be an analogue probe (also known as a scanning probe) which detects and reports the extent of deflection of the stylus from its rest position. Examples of such a probe is described in more detail in UK patent publication GB1551218 and US patent publication USS390424. Furthermore, the probe 116 need not necessarily be a contact probe. It could for instance be a non-contact probe, such as a capacitance or inductance probe. Optionally, it could be a vision probe, such as a camera probe, or a structured light analysis probe. Examples of such probes are described in more detail in International patent application PCT/GB2009/001260 (publication number WO2009/141606) and PCT/GB2008/002758 (publication no WO2009/024756).

As shown, the tablet computer 200 comprises a housing 202 containing various processor and memory electronics (not shown) and a touch-sensitive screen 204. The tablet computer 200 can be moved freely, i.e. it can be moved in free-space. The tablet computer 200 also comprises a plurality of accelerometers (not shown) which can be used to detect movement of the tablet computer in free-space. The tablet computer 200 can be moved in six degrees of freedom; three orthogonal degrees of freedom, x, y and z, and also three rotational degrees of freedom, a, b and c (i.e. rotation about the x, y and z axes), illustrated by the set of axes 201. Movement in the six degrees of freedom can be detected via the accelerometers. Although as shown the tablet computer's 200 degrees of freedom are aligned with the CMM's degree of freedom (i.e. the x, y and z axes illustrated by the set of axes 101), this need not necessarily be the case. Indeed, as explained in more detail below, the tablet computer's 200 set of axes 201 in which movement is detected is defined relative to, and hence follows, the tablet computer 200 and not the CMM 100.

The tablet computer 200 also comprises a wireless transceiver via which it communicates with the desktop computer 300 wirelessly. In particular the desktop computer 300 is connected, via an Ethernet connection, to a wireless router 302 which provides a wireless local area network (WLAN) according to the 802.11 standard, via which the tablet computer 200 communicates with the desktop computer 300. The tablet computer 200 is wirelessly connected with the wireless router 302 via the WLAN provided by the wireless router 302. Of course, other wireless technologies and standards could be used. For example, the tablet computer 200 could be connected to the desktop computer 300 via the Bluetooth™ wireless standard. Furthermore, as will be understood, the tablet computer 200 could even have a wired connection to the desktop computer 300, although as will be understood this is less desirable because such a wired-connection tethers the tablet computer 200 to the desktop computer 300.

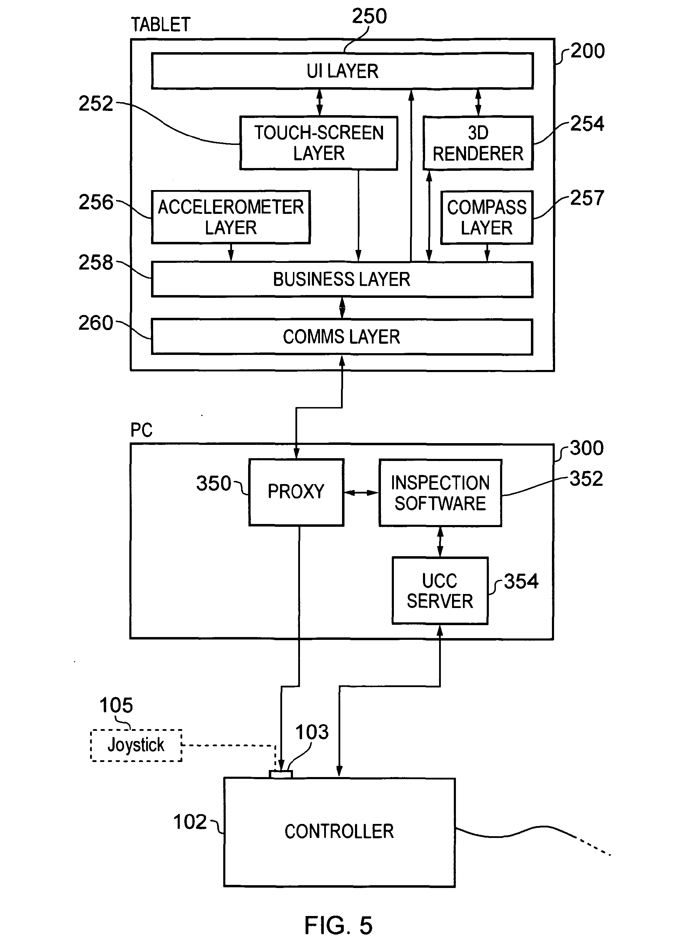

In the embodiment described, the desktop computer 300 could be a general purpose computer (i.e. a "PC"). However, as will be understood, the desktop computer 300 could be replaced with a bespoke processing device. As will also be understood, the system architecture illustrated in more detail below in connection with Figure 5 is only one of many different ways in which the invention can be implemented. For example, in particular embodiments, the controller 102 or the tablet computer 200 could have the below described functionality of the desktop computer 300, such that the tablet computer 200 can communicate directly with the controller 102. In further alternative example embodiments, the tablet computer 200 could have the below described functionality of the desktop computer 300, and optionally also of the controller 102 such that the tablet computer 200 communicates directly with the CMM 100 via a simple wireless or wired interface.

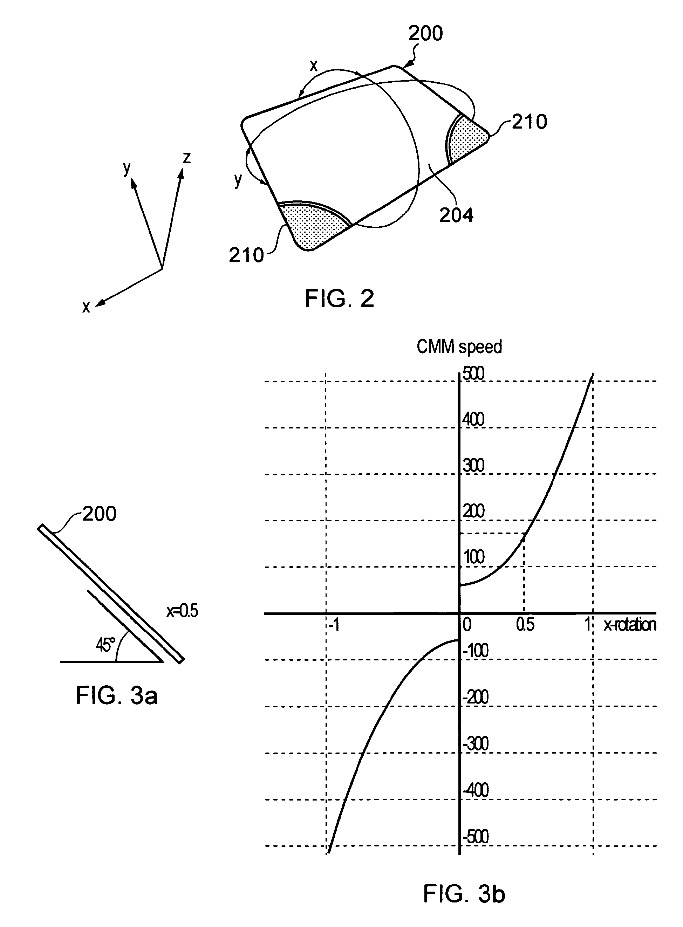

Figure 2 shows a schematic view of a tablet computer 200 according to one embodiment of the invention. In this case, the touch-screen 204 simply displays two "activation areas" 210 in opposite corners along the bottom edge of the touch-screen display 204. As described in more detail below, the operator needs to touch both of these activation areas 210 at the same time in order to be able to use the tablet computer 200 to control the movement of the probe 116 on the CMM 100. Not only do these activation areas 210 serve to "activate" the tablet computer 200 to be used to control the motion of the probe 116 in response to movement of the tablet computer 200 in free-space, but they also serve to "deactivate" such functionality of the tablet computer 200 if one or both of the activation areas 210 is released. The activation areas 210 therefore act as, what is colloquially known as "dead-man handles", and ensures that the motion controlling functionality of the tablet computer 200 is disabled if, for instance, the tablet computer 200 is released by the operator, e.g. due to the operator dropping the tablet computer 200. As will be understood, the apparatus 10 could be configured to halt motion of the CMM's 100 axes in other situations, for instance, if the tablet computer 200 senses that it is being shaked by the operator. Furthermore, the apparatus 10 could be configured to halt motion of the CMM's 100 axes if it determines that communication between the table computer 200 and CMM 100, controller 102 and/or PC 300 has been lost and/or interrupted.

As will be understood, the activation areas need not be provided by areas (e.g. areas 210) on the touch-sensitive screen. Rather, they could/or be provided by touch sensitive areas on other parts of the tablet computer 200, and could for instance comprise buttons, switches or the like. Furthermore, if desired, only one activation area could be provided, or more than two activation areas could be provided. Furthermore, although such activation areas are highly desirable and recommended from a health and safety point of view, they are not an essential part of the invention. For instance, the apparatus could be configured such that the CMM 100 moves the probe 116 in accordance with any movement of the tablet computer 200.

Figures 3a and 3b illustrate how the tablet computer 200 can be used to control movement of the probe 116 mounted on the CMM 100. In summary, in the embodiment described, the accelerometers inside the tablet computer 200 are used to sense accelerations of the tablet computer 200 about the x and y axes and this information is passed to the desktop computer 300, which is turn passes this information to the controller 102 which controls the motors on the CMM 100 to move the measuring probe 116. In order to provide predictable movement, the tablet computer's 200 x and y axes are associated with particular movement axes of the CMM. For instance, in the set-up shown in Figure 1, the tablet computer's 200 x-axis is tied to the CMM's 100 y-axis, and tablet computer's 200 y-axis is tied to the CMM's 100 x-axis. Accordingly, rotational movement of the tablet computer 200 about its x-axis will cause linear movement of the probe 116 along the CMM's 100 y-axis, and rotational movement of the tablet computer 200 about its y-axis will cause linear movement of the probe 116 along the CMM's 100 x-axis.

In particular, the described embodiment monitors the extent ofrotation ofthe tablet computer 200 about an axis from the point both activation areas were initially touched, and maps the detected extent of rotation onto a speed of linear movement of the CMM's 100 associated axis.

For example, with reference to Figures 3a, there is shown an end view of the tablet computer 200 that has been moved through an angular orientation of 45° to the horizontal about the x-axis. (In this embodiment, the operator initially touched the activation areas 210 when the tablet computer 200 was horizontal and then rotated the tablet computer 200 about the x-axis, through 45°). Figure 3b illustrates how rotational movement of the tablet computer 200 is mapped onto movement of the probe 116 along the CMM's 100 y-axis. As shown, the speed of movement in the y-axis depends on the magnitude of rotation of the tablet computer 200 about the x-axis. As shown on the graph, x-axis rotation is measured between 0 to 1 (and 0 to -1), which corresponds to an angular orientation between 0° to 90° (and 0° to -90°) taken from the orientation of the tablet computer 200 at which the activation areas 210 were first touched. In the embodiment described, any rotation through more than 90° has no further effect in increasing the speed of movement of the probe 116 along the CMM's axes. As shown, in Figure 3a, the tablet computer 200 that has been moved through an angular orientation of 45° to the horizontal about the x-axis, and so this corresponds to a value of x = 0.5. As shown on the graph in Figure 3b, this corresponds to a CMM speed of approximately 175, (where 0 = no movement/speed and 500 = maximum speed along the CMM's axis).

As can be seen, the function used to map rotational movement of the tablet computer 200 to CMM speed is not a linear function. Rather, it is a non-linear function, the rate of growth of which increases with increased rotation of the tablet computer 200. In the particular example described, the rate of growth is exponential, however, as will be understood, this need not necessarily be the case. This ensures that for small rotational movements of the tablet computer 200 from its initial activated orientation the speed of probe 116 movement along the CMM's axis remains slow, but this steadily increases as the rotational orientation of the tablet computer 200 increases. This has been found to reduce the sensitivity of the system at smaller rotational orientations ofthe tablet computer 200, thereby increasing the ease by which measurement points can be taken accurately with the probe 116, whilst still allowing fast, coarse movement of the probe 116 if desired.

Furthermore, as shown, the function does not pass through 0. This is because in the particular embodiment described, the CMM's axis did not move until a signal indicating a threshold speed was applied (in this particular case 59.9). Therefore, the function shown avoids such a dead-spot, and ensures movement of the probe 116 along the CMM's 100 axis as soon as the tablet computer 200 is moved. As will be understood, such a dead-spot may or may not be present on other types of machines, although possibly with different threshold values.

As will be understood, the same function or a different function(s) could be used for mapping movement of the hand-held device 200 in the other degrees of freedoms to relative movement ofthe probe 116 and object 106. Furthermore, the hand-held device 200 could be configured such that the operator can select between a plurality of different functions for the same degrees of freedom. For instance, first and second curved functions could be provided, wherein the first curved function is less sharply curved than the second function. Accordingly, the first curved function could be more suitable for use by novice operators and the second curved function could be more suitable for use by experienced operators. A control could be provided via the hand-held device's 200 touch screen interface to enable the operator to select which function to use. I.e. a toggle switch could be provided which enables the operator to toggle between the different functions. Furthermore, rather than a plurality of different functions being provided, one function could be provided which could be altered by the operator. For instance, a parameter of the function could be changeable by the user to alter the sharpness of the curved function. This could be changed via a sliding button provided by the hand-held device's 200 touch screen interface which the operator can move to alter the function. In a further implementation, the operator can select a between different functions (or change the function) to alter the maximum speed that the axes of the CMM can move in response to movement of the hand-held device 200.

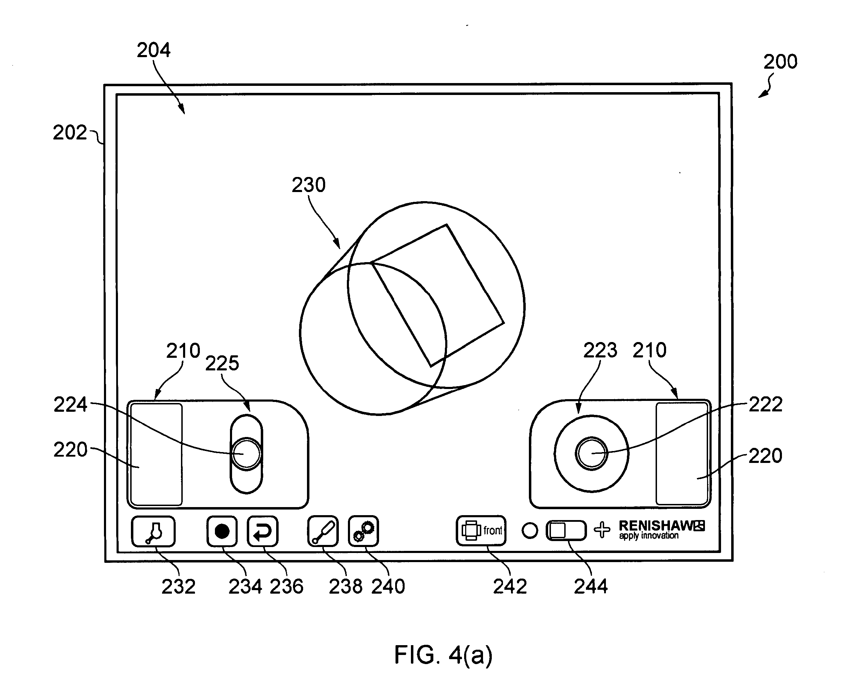

Referring to Figure 4a, there is shown a screenshot of tablet computer 200 according to another embodiment ofthe invention. In contrast to that shown in Figure 2, there is much more information displayed on the screen. There are still the two activation areas 210 provided toward the opposite corners along the bottom edge of the tablet computer. However, in this case each activation area 210 comprises a blank area 220 (which can be used in much the same way as described above in connection with Figure 2 - i.e. the blank areas 220 are essentially dead-man's handles) and a joystick area 223, 225 containing a joystick 222, 224. In particular, the right-hand activation area 210 comprises a 2D joystick 222, and the left-hand activation area 210 comprises a 1D joystick 224. As will be understood, the joysticks 222, 224 are provided by software showing graphical representations of the joystick pads, also commonly known as "D-pads". The operator can control the 1D and 2D joysticks 224, 222 by sliding their thumb (or finger) over the joystick, in the same manner as they would do with a physical joystick pad/D-pad. As described in more detail below, because the joysticks 222, 224 are located within the activation areas 210, they themselves can be used to "activate" the accelerometer-based motion control of the probe 116. However, again as described in more detail below, in certain embodiments it may be preferred that accelerometer-based motion control is not activated if certain combinations of the joysticks 222, 224 are selected.

As described in more detail below, as points on the object are taken during the inspection process, data is fed back to the tablet computer 200 which enables a graphical representation of the object to be built up on the screen 204 of the tablet computer 200. This is illustrated in Figure 4a by the graphical representation 230 in the middle of the touch-screen 204. The operator can manipulate the view of the graphical representation 230 by sliding their finger(s) on the touch-screen 204 over the graphical representation 230 so as to change the angular orientation. Furthermore, the operator can zoom out-of or into the graphical representation 230 by the action of pinching their fingers or spreading their fingers apart on the touch-screen 204 over the graphical representation 230. Of course, as will be understood, these are only examples of the types of gestures that could be used to manipulate the model, and other gestures and operations are available for interacting with the graphical representation 230.

As also shown in Figure 4a, the touch-screen 204 provides the operator with a number of buttons. Taking the buttons in order from left to right, the first button 232 can be selected by the operator to switch the tablet computer's 200 accelerometers from being used to control the linear x, y axes of the CMM 100 to controlling the rotational axes A1 A2 of the head 114. When this button is selected, movement of the probe 116 about the rotational axes is controlled in much the same way as movement along the linear axes. That is rotational movement of the tablet computer 200 causes rotational movement about the head's 114 A1 and A2 axes. In particular, rotational movement of the tablet computer 200 about its x-axis can be tied to rotational movement about one of the head's 114 axes (e.g. Al) and rotational movement of the tablet computer 200 about its y-axis can be tied to rotational movement about the other one of the head's 114 axes (e.g. A2). Furthermore, the same or a similar function to that shown in Figure 3b can be used to control the speed of rotational movement of the probe 116 about the head's 114 axes A1, A2.

Selection of the second button 234 causes a point, e.g. a way point to be taken. This can be useful if the tablet computer 200 is being used to program a measurement path, as it can be used to instruct the CMM 100 to move the probe 116 to a certain point away from the object 106 when navigating around the object 106. The third button 236 can be used to undo points taken; either those generated by contact between the probe 116 and object 106 or those created by selecting the second button 234. The fourth button 238 can be used to turn the probe 116 on or off (i.e. it can be turned off so that it doesn't issue a trigger signal even if contact between the probe 116 and object 106 is made). The fifth button 240 can be used to turn the CMM's 100 motors off. This can be useful if the operator wishes to move the probe 116 manually.

Selection of the sixth button 242 brings up an option box on the touch-screen which enables the operator to manually tell the tablet computer 200 the orientation of the tablet computer 200 relative to the CMM 100. This is so that the tie between the tablet computer's 200 axes and the CMM's 100 axes can be changed depending on the orientation of the tablet computer 200 and CMM 100. For instance, as described above, the tablet computer's 200 x-axis is tied to the CMM's 100 y-axis, and tablet computer's 200 y-axis is tied to the CMM's 100 x-axis. However, if the operator walks around to the side of the CMM 100 and faces the CMM 100 such that the tablet computer 200 has been rotated through 90° about its z-axis, it may be more appropriate for the tablet computer's 200 x-axis to be tied to the CMM's 100 y-axis, and tablet computer's 200 y-axis to be tied to the CMM's 100 x-axis. Accordingly, the operator can, via button 242, tell the tablet computer 200 that the orientation between the tablet computer 200 and CMM 100 has changed as such so as to thereby change the tie between the tablet computer's 200 and CMM's 100 axes. As described in more detail below, such a change in the tie between the tablet computer's 200 and CMM's 100 axes can be effected automatically.

The seventh button 244, can be used to toggle the 2D joystick 222 between an unrestricted 2D joystick in which the 2D joystick 222 can be moved unrestricted in both linear dimensions, x and y, at the same time (as shown), and a restricted 2D joystick, in which the 2D joystick 222 can only be moved in one linear dimension x or y at any one time (in this case, the circular (O) joystick boundary 223 will be replaced with a crossed (+) boundary, thereby providing a visual indication to the operator of the restriction in place).

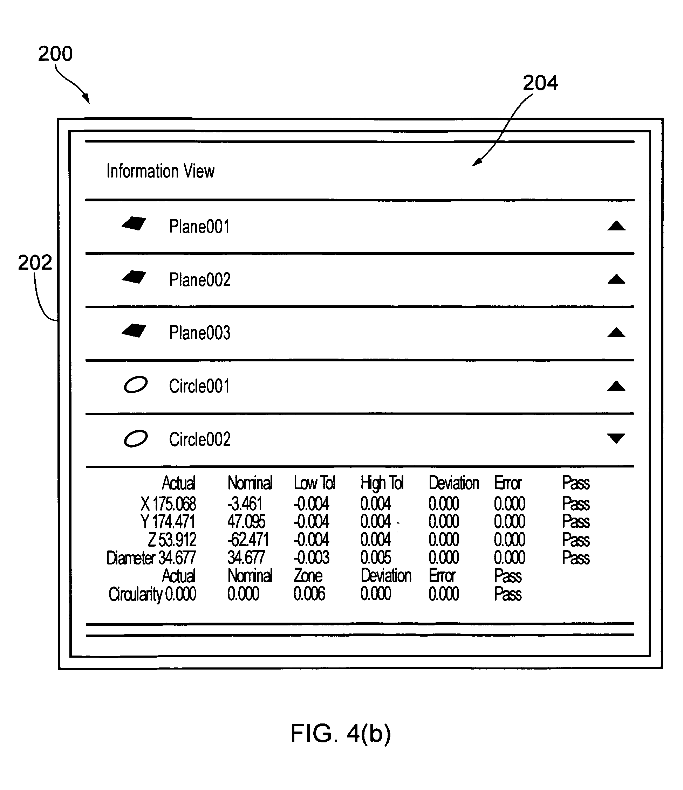

The operator can also interrogate the tablet computer 200 for information about the coordinate positioning apparatus, and in particular for example about the object 106 being inspected. In particular, the tablet computer 200 can be used to review measurement data about the object 106, such as the size of a feature and/or the distance between two or more features. Such data interrogation can be accessed via the operator interacting with the tablet computer 200, e.g. via the touch screen 204. For example, menus can be provided which can be accessed for example by the operator selecting a button (not shown) on the tablet computer 200, e.g. on the touch screen 204, or by tilting the tablet computer 200 is a prescribed manner, e.g. by tipping the tablet computer 200 into a substantially vertical orientation on one of its shorter ends. For example, Figure 4b shows an example screen presented to an operator when they tip the tablet computer 200 vertically onto one of its shorter ends. As shown, the operator can select to view measurement data on any particular feature measured (by touching the name of the feature (e.g. Plane001, Plane002). In the example shown, measurement data is shown for Circle002).

As described above, the inspection software 352 may be configured to automatically determine the type of feature being measured. The inspection software 352 may require input from the operator regarding measurement data obtained during operation in order to aid the feature recognition process. In this case, the apparatus 10 could be configured such that a request for confirmation of the type of feature being measured from the operator is shown on the tablet computer's 200 touch screen 204. For instance, a choice oftypes of features could be displayed on the touch-screen 204 (e.g. plane, line, and/or circle). The operator can then respond via the touch-screen 204, e.g. via selecting the appropriate type of feature.

Referring now to Figure 5, there is shown a schematic illustration of the software architecture of the tablet computer 200 and desktop computer 300. As shown, the software in the tablet computer 200 and desktop computer 300 can be distilled into a number of layers and components. In particular the tablet computer 200 comprises a user interface ("UI") layer 250, a touch-screen layer 252, a 3D renderer 254, an accelerometer layer 256, a compass layer 257, a business layer 258 and a communications ("comms") layer 260, and the desktop computer 300 comprises a proxy 350, inspection software 352 and a Universal CMM Controller ("UCC") server 354. These layers and components will be described in more detail below.

The UI Layer 250 controls the display of graphics on the touch-screen 204 (such as those shown in Figure 4a) and also handles the detecting of touches on the touch-screen 204 including reporting the position ofwhere the touch-screen 204 is being touched to the touch-screen layer 252.

The touch-screen layer 252 takes such touch signals from the UI Layer 250 and determines what, if any, operation to perform in response to such touches. In response to this, it can instruct the UI Layer 250 to change the display so as to show that the touch has been detected. For instance if a button or activation area has been touched it could be highlighted, e.g. by changing its colour. As a further example, if a joystick 222, 224 has been manipulated, the position of the joystick pad on the touch-screen 204 could be changed to reflect the operator's actions. Furthermore, the touch-screen layer 252 also sends instructions to the business layer 258 in response to detected touching of the touch-screen 204, as described in more detail below.

The 3D renderer 254 handles the building of the graphical representation 230 in response to model data from the desktop computer 300, as described in more detail below.

The accelerometer layer 256 handles the data from the tablet computer's 200 accelerometers and passes the information to the business layer 258. Likewise, the compass layer 257 handles data from the tablet computers 200 in-built compass and passes the information to the business layer 258.

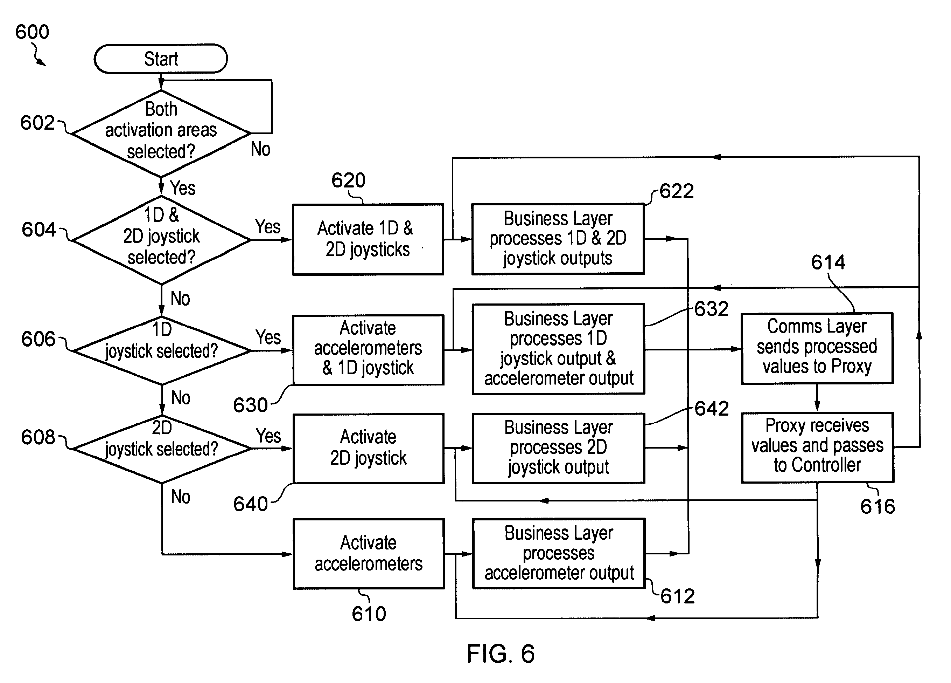

The business layer 258 processes data from each of the accelerometer layers 256, compass layer 257, touch-screen layer 252 and 3D renderer 254, and passes such processed data to the comms layer 260 for sending to the desktop computer 300. For instance, the business layer 258 processes the accelerometer layer's 256 output and converts it, using for instance the schemes described above in connection with Figures 3a and 3b, into values that can be used to control the movement of the measurement probe 116. In embodiments in which the operator can manipulate the 3D model shown on the touch-screen 204, the 3D renderer can be involved in processing the location of a touch on the touch-screen 204 and deriving what part of the model the operator had touched and pass this information to the business layer 258 for processing (e.g. to highlight the touched part of the model, and/or display information on the touched part ofthe model). The business layer 258 also receives data from the comms layer 260 that the desktop computer 300 has sent to the tablet computer 200 and processes and/or passes it to the appropriate layer. For instance, it receives information from the desktop computer 300 about the graphical representation 230 to be shown on the touch-screen 204 and passes it to the 3D renderer. The comms layer 260 handles the sending and receiving of data to and from the desktop computer 300 via the WLAN. Further functionality of each of the layers will be described in more detail below in connection with Figures 6 to 8.

The desktop computer's 300 proxy 350 handles the sending and receiving of data to and from the tablet computer 200 (via the wireless router). Furthermore, the proxy 350 passes measurement probe motion instructions received from the tablet computer 200 directly to the controller 102. As illustrated in Figure 5, the proxy 350 is connected to an input port 103 on the controller 102. With prior art systems, a joystick 105 would be directly connected to this input port 103 (illustrated by the dashed lines), and the signals from the joystick would be received by the controller 102, which interprets the signals and uses them to effect movement of the probe 116 on the CMM 100. In the described embodiment, the proxy 350 provides such signals instead of the joystick 105. However, as will be understood, there could be embodiments of the invention in which a joystick 105 is also provided which can be used to control the movement of the probe 116. The desktop computer also comprises a UCC server 354 which handles data from the controller 102, and inspection software 352 which uses the data from the controller 102 (received via the UCC server 354) to, amongst other things build a 3D representation of the object being inspected.

As mentioned above, the system architecture illustrated in Figure 5 is only one of many different ways in which the invention can be implemented, and various of the modules can be provided via different parts of the apparatus. Indeed, as mentioned above, the PC could be removed entirely, with its modules being provided by the tablet computer 200, the controller 102, or by a combination of both of them

Figure 6 illustrates how information flows from the tablet computer 200 to the controller 102 so as to effect movement of the probe 116. The method 600 begins at step 602 at which the touch-screen layer 252 monitors signals from the UI Layer 250 to determine whether both the activation areas 210 have been touched by the operator. If not, the method continues to wait until they have been. Once both the activation areas 210 have been touched, then the method proceeds to step 604 at which point it is determined whether both the 1D 224 and 2D 222 joysticks have been selected. In the currently described embodiment, neither of the joystick area's 222, 224 have been selected (only the blank areas 210 have been selected) and so the method proceeds to steps 606 and then to step 608 at which points it is determined if only the 1D 224 joystick area or 2D joystick area has been selected. In the current embodiment only the blank areas 210 have been selected and so the answer at both of these points is no, and so the method proceeds to step 610. At step 610, the tablet computer's 200 accelerometers are activated so that their outputs are monitored by the accelerometer layer 256 and reported to the business layer 258. At step 612, the business layer 258 processes the output from the accelerometer layer 256 so as to generate instructions for moving the probe 116, in a manner according to that described above in relation to Figures 3 a and 3b. The business layer 258 passes the instructions to the comms layer 260 which at step 614 sends the instructions to the proxy 350 via the WLAN. At step 616, the proxy 350 in turn passes the instructions to the controller 102 which interprets the instructions as it would normally interpret instructions from a joystick 105 and effects movement of the probe 116 in accordance with the instructions. Steps 612 to 616 continue in a loop until at least one of the activation areas is released by the operator, at which point control returns to step 602.

As will be understood, in line with the description above, if either of the activation areas 210 is released by the operator at any stage in the process, then the method 600 aborts and control returns to step 602. Furthermore, a STOP signal is sent to the controller (via the desktop computer 300) to ensure that any movement of the probe 116 is halted.

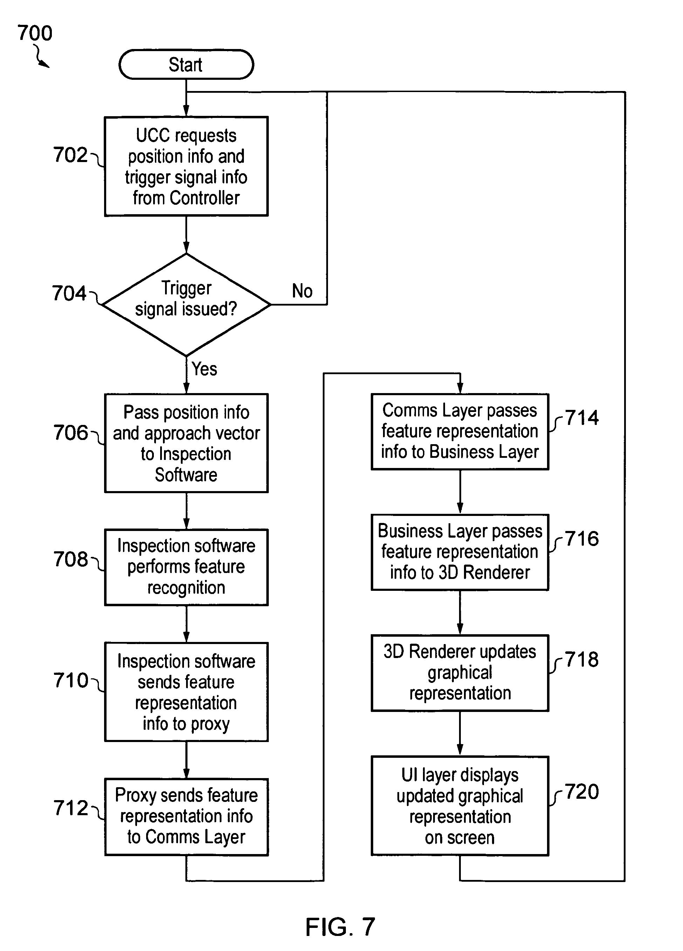

Figure 7, illustrates how information is passed back from the controller 102 to the tablet computer 200. As shown in step 702 the UCC server 354 polls the Controller 102 for position information from the CMM's 100 encoders and also whether the probe 116 has issued a trigger signal. The Controller 102, passes the information back to the UCC server 354, and at step 704 the UCC server 354 determines whether the Controller 102 has indicated that the probe 116 has issued a trigger signal. If not, then the UCC server 354 makes a record of the position information received and passes control back to step 702. When the UCC server 354 does receive from the Controller 102 an indication that the probe 116 has issued a trigger signal, control passes to step 706 at which point the UCC server 354 uses the current position and also previous position information it has received to determine the approach vector of the contact point. The UCC server 354 then, at step 706, uses the position information from the encoders, and the approach vector of the probe 116, along with information already known about the probe (e.g. its length, stylus tip diameter, etc) to determine where the point of contact between the probe 116 and object 106 occurred and records this.

This information is then passed to the inspection software 352 which records the point of contact data. The inspection software 352 also performs feature recognition processes to build up a representation of the feature of the object being measured. For instance, the feature recognition processes could be used to try to identify whether the feature being measured is a planar feature such as a flat face, or a circular feature such as a circular bore. Feature recognition algorithms are known, and for instanced are described in European Patent no. 0254515, the content of which is incorporated into this specification by this reference. As illustrated by steps 710 to 716, the inspection software 352 then sends this feature representation data to the 3D renderer 254 in the tablet computer 200 via the proxy 350, the tablet computer's 200 comms layer 260 and business layer 258. The 3D renderer then, at step 718, processes the feature representation data in a format suitable for showing as a graphical representation on the touch-screen 204, and then passes the graphical representation to the UI Layer 250 which then displays the graphical representation 230 on the touch-screen 204 at step 720.

As will be understood, the inspection software 352 can perform additional functions to that described above. For instance, the inspection software 352 can be used to build formal reports about the object being inspected; store measurement path programs and send instructions to the Controller 102 to execute the measurement program; and display representations of the features measured on a display (not shown) connected to the desktop computer 300.

As illustrated in Figure 6, there are ways of controlling the movement of the probe 116 other than solely via the tablet computer's 200 accelerometers. For instance, as will now be described, it is possible to control the movement ofthe probe 116 via the 1D 224 and 2D 222 joysticks provided by the user interface on the tablet computer's 200 touch-screen 204. For example, if at step 604 it is determined that the operator has touched the touch-screen 204 where the 1D 224 and 2D 222 joysticks are located, then control proceeds to step 620 at which point the 1D 224 and 2D 222 joysticks are activated at step 620. This involves the touch-screen layer 252 monitoring the position of the operator's digits in the 1D 224 and 2D 222 joystick areas and reporting such position information to the business layer 258. At step 622 the business layer 258 processes such position information so as to generate instructions for moving the probe 116. In particular, the business layer 258 processes position information regarding the 1D joystick 224 to generate instructions for moving the quill 112 in the Z-axis so as to move probe 116 in the Z-axis, and processes position information regarding the 2D joystick 222 to generate instructions for moving the quill 112 in the X-axis along the cross-member 110, and also for moving the gantry along the Y-axis, thereby moving the probe 116 along the X and Y axes. The business layer 258 processes the position information from the touch-screen in the same way to that described above in connection with Figure 3b, i.e. it uses a non-linear (e.g. exponential) function to map extent of movement away from the original touched position to speed of CMM movement.

Note that in the scenario described immediately above in connection with steps 620 and 622, the tablet computer's 200 accelerometers are not enabled. Accordingly, movement of the probe 116 is controlled solely by the 1D 224 and 2D 222 joysticks. A similar situation arises if it is determined in step 608 that the operator has touched the touch-screen 204 where the 2D joystick 222 is located (but not the 1D joystick 224). In this case, again, the accelerometers are not enabled, but the business layer 258 processes position information regarding the 2D joystick 222 to generate instructions for moving the quill 112 in the X-axis along the cross-member 110, and also for moving the gantry along the Y-axis, thereby moving the probe 116 along the X and Y axes.

However, in contrast to this, if it is determined at step 606 that the operator has touched the touch-screen 204 where the 1D joystick 223 is located (but not the 2D joystick 222), then the accelerometers are enabled, and the business layer 258 processes the output from the accelerometer layer 256 so as to generate instructions for moving the probe 116 along the X and Y axes, in a manner according to that described above in relation to Figures 3 a and 3b, as well as processing position information regarding the 1D joystick 224 to generate instructions for moving the quill 112 in the Z-axis so as to move probe 116 in the Z-axis.

In further alternative embodiments, the 1D 224 and/or 2D 222 joystick could be used to control relative movement of the probe 116 and object 106 at the same time as the accelerometers. In particular, the accelerometers could be used to control linear relative movement of the probe 116 and object 106 and the 1D 224 and/or 2D 222 joystick could be used to control rotational relative movement of the probe 116 and object 106. For example, at step 620, the 1D and 2D joysticks as well as the accelerometers could be activated, and at step 622 the business layer 258 could process the output from the accelerometer layer 256 so as to generate instructions for moving the probe 116 along the X and Y axes, process position information regarding the 1D joystick 224 to generate instructions for moving the quill 112 in the Z-axis so as to move probe 116 in the Z-axis, and process position information regarding the 2D joystick 222 to generate instructions for controlling the head 114 to move the probe 116 about the A1 and A2 axes.

As mentioned above, the sixth button 242 provided by the user interface on the touch-screen 204 enables the operator to tell the tablet computer 200 its orientation relative to the CMM 100, and thereby manually change which axes of the table controller 200 are tied to which axes of the CMM 100. This can be used by the operator at the start of a measurement operation to tell the tablet computer 200 what its orientation is relative to the CMM 100, i.e. is it at the front, one of the sides of back of the CMM 100. The tablet computer 200 can then tie its axes to appropriate axes ofthe CMM 100 (e.g. in the embodiment described, if the operator tells the tablet computer 200 that it is facing the front of the CMM 100, then the apparatus is configured such that rotations of the tablet computer 200 about its y axis control linear movement of the measurement probe 114 along the CMM's 100 x axis).

The sixth button 242 can also be used to tell the tablet computer 200 when its orientation relative to the CMM 100 has changed, so as thereby to change the tie between the tablet computer's 200 and CMM's 100 axes (e.g. in the embodiment described, if the operator tells the tablet computer 100 that is facing the side of the CMM 100, then the apparatus is configured such that rotations of the tablet computer 200 about its y axis control linear movement of the measurement probe 114 along the CMM's 100 y axis).

The described tablet computer 200 is also able to determine changes in its orientation relative to the CMM 100 and automatically change which axes of the tablet computer 200 are tied to which axes of the CMM 100. This is because as shown in Figure 5, a compass layer 257 is provided which monitors the output of a compass (not shown) built in to the tablet computer 200. The compass layer 257 passes the data from the compass to the business layer 258. When the business layer 258 has determined that the tablet computer 200 has rotated about a vertical axis (e.g. about its Z-axis when the tablet computer is laid horizontally) sufficiently so as to substantially change the relative orientation of the tablet computer 200 and CMM 100, the business layer 258 changes which axes of the tablet computer 200 are tied to which axes of the CMM 100 (in the particular embodiment described, this is done when the tablet computer has rotated though at least 45° about a vertical axis). Of course, such detection of change in orientation could be implemented in ways other than via a compass, for instance via the use of the tablet computer's 200 accelerometers, and/or gyroscope.

As described above, a vision probe such as a camera probe could be mounted on the head 114 of the CMM 100 instead of a contact probe. As will be understood, a camera probe obtains images, for example video images, of the object being inspected. Software, for instance the inspection software 352 can analyse the images to extract measurement information therefrom It is also possible that images, and for instance a video stream, from the camera probe is passed from the camera probe, to the tablet computer 200 and shown on the touch-screen 204 so that the operator can see what the camera probe sees. For instance, the image(s)/video stream can be passed via the Controller 102, UCC Server 354, inspection software 352, proxy 350, and comms layer 260 to the business layer which then processes the data into a format suitable for passing to the UI Layer 250 to display on the touch-screen 204. This video stream could be utilised in various ways. For instance, one or more, e.g. a series of, still pictures of the part being inspected could be obtained and stored. The picture(s), graphical representation 230 and/or measured points could be overlain each other (with one or more of the (s), graphical representation 230 and/or measured points being partially transparent) so as to enable the operator make comparisons of the data. This could be either in-process, e.g. during measurement, or post-process. Additionally, this could be done on the tablet computer 200 itself, or on some external computer. Furthermore, the operator could use the video stream to guide the movement of the camera probe during measurement. This could be instead of or in addition to looking directly at the actual workpiece and camera probe. This can be particularly useful with Through-The-Lens-Illumination (TTLI) camera probes which project a narrow beam of light through the camera probe's imaging lens, as it can aid the operator in positioning the beam on the part of the workpiece to be measurement. For instance, when measuring narrow bores, it can help the operator to see that the correct part of the bore is being illuminated by the beam,

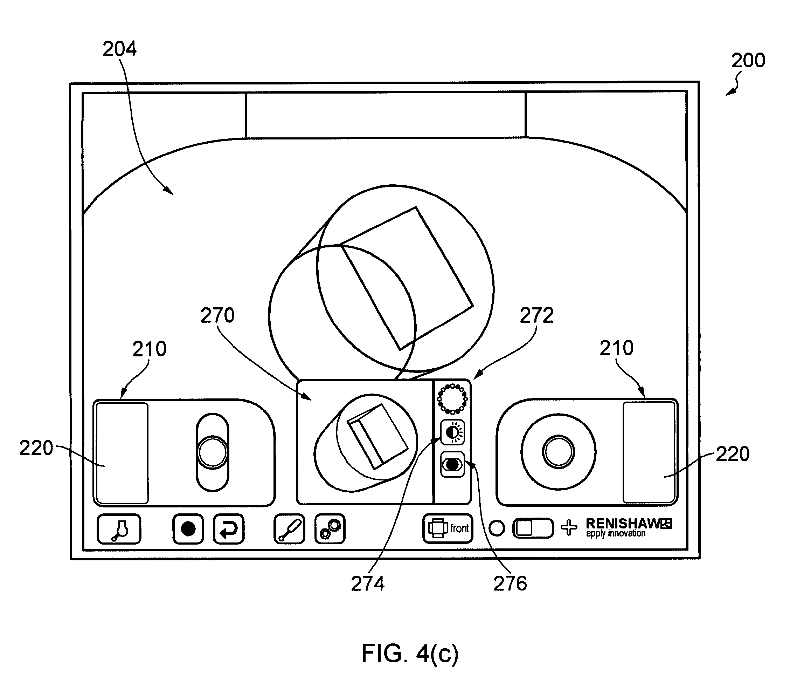

Furthermore, the tools can be provided to the operator via the touch-screen 204 to enable the operator to control certain properties of the camera probe, such as exposure and focus, lighting, etc.. This is illustrated in Figure 4c, which shows a screenshot of the tablet computer 200 similar that shown in Figure 4a, and like parts share like reference numerals. As can be seen, in this embodiment a live video stream 270 from the camera probe is displayed on the touch screen 204. Furthermore, there is provided a number of tools 272, 274, 276 for controlling the camera probe mounted on the CMM. In this embodiment, the camera probe has lighting for illuminating the artefacts it is inspecting. In particular, a ring of LEDs is provided around the object lens of the camera probe. Accordingly, as can be seen there is provided a lighting control tool 272 for controlling the turning on and off any ofthe LEDs in the ring of LEDs, an LED intensity control tool 274 for controlling the brightness of the LEDs and a focus tool 276 for controlling the position of the focal plane of the camera probe. Furthermore a "shutter" contol tool could be provided (e.g. via the touch screen 204) which effects the taking and storing of a snapshot of the current output of the camera probe.

Providing a tablet computer 200 such as that described above for controlling the movement of a probe on a CMM frees up the operator to interact with the part regardless of their position. This has been found to help reduce programming errors, simplify the programming task and reducing measurement programming cycle time. This is particularly advantageous when considering angled tip probes such as a surface finish probe or other styli that require extensive visual observation when, for instance, programming the measurement of small sized features, such as small holes.

It has also been found that providing such above described display functionality on the hand-held device 200 in combination with accelerometer (and optionally joystick) control means that the operator can learn previously complex measurement operations much more easily. For example, simultaneous movement in x, y, z and/or about rotational axes A1 A2 at the same time is difficult on a standard known joystick for novice. Becoming expert in the use of such standard joystick is an art in itself requiring significant training and practice. This complexity also increases the capacity for making an error, especially for instance when the operator's attention is divided between the operating the control device and a having perform actions on the user interface of a separate desktop computer. This is especially evident when the probe is in close collision proximity to the part. A hand-held device that includes such a user interface means that the operator's concentration is not divided between two separable devices - in turn reducing the likelihood of error. Furthermore, the tablet computer 200 described provides intuitive and easy to use controls for the simultaneous control of movement along/about multiple axes, again, without necessarily having to switch modes of operation. Furthermore, as described above, switching orientation can be handled automatically using the compass. Consequently each of the above features results in a reduction of likelihood of operator error which would result in collisions between and damage to expensive probes and objects.

Further still, the use of functions such as those described above in connection with Figure 3b enable versatile control over the speed of movement of the measurement probe, without having to switch between different fast/slow modes. Accordingly, when CMM speed is also intuitively managed by the same hand-held device (e.g. the degree of tablet computer tilt determines the speed of acceleration/deceleration up to a maximum speed) then this can remove yet another interaction required on currently known joysticks (i.e. that of holding down a separate button). Using acceleration curves such as that described in connection with Figure 3b, can provide a very responsive tilt system with limits which means that the operator can very quickly exercise a very fine level of control over the rate of acceleration and deceleration of the device. High rates of acceleration for a novice operator can be dangerous as the system quickly can become incontrollable. As described above, it is possible to give the operator choice to allow better control, for example allowing the easy choice of novice/expert modes of use that modify the acceleration curves (or use different acceleration curves) appropriately.

Consequently an apparatus according to the present invention is much more intuitive and simpler to learn. This reduces training costs and allows novice operators to become more productive more quickly. In turn this encourages probing measurement generally thereby leading to greater quality parts as previously ignored features may now become measurably and measured.

The hand-held device 200 can be used to program the measurement path for inspecting the object, execute the measurement of the part, collect, display and/or analyse results. This is more efficient than current systems that require separate joystick and PC. As described above, measurement and/or programming data may be stored on the hand-held device. The operator can interact with that data. The data can relate to the current measurement task. The data may be historic, allowing trend analysis. The data may be derived from another PC, again allowing comparative analysis. By being able to deliver that information to the operator whenever and wherever required may assist in optimising the programming task - especially in ad-hoc measurement. For example: looking at historic instances of ad-hoc measurement can inform an operator where part variation is most likely and can highlight to them the need to perform an ad-hoc measure on the current part on and indicated feature(s) - i.e. the device can inform the operator as to the best measurement strategy.

In the described embodiment, the tablet computer 200 is a general, multi-purpose tablet computer 200, such as the iPad® available from Apple, Inc or the Galaxy Tab available from Samsung Electronics Co. Ltd. Of course, other hand-held motion sensitive devices could be used and need not be limited to tablet computers. For instance, motion sensitive mobile phones, such as the iPhone® available from Apple, Inc could be used. Alternatively, the hand-held device could be a bespoke device designed purely for the use of controlling the CMM 100. Although in the embodiments shown the hand-held device comprises a touch-screen, this need not be the case. For instance, the screen could be non-touch sensitive, and instead buttons, or a peripheral input device (such as a keyboard or mouse), could be provided in order to interact with the hand-held device. Furthermore, the hand-held device need not necessarily have a screen at all. Instead, the hand-held device could comprise basic display indicators, or have no visual display means at all. In this case, the hand-held device could be used purely as a motion-sensitive input device for controlling the movement of the probe 116.

## Claims

1. A coordinate positioning apparatus comprising:
a coordinate positioning machine having a measuring probe for interacting with an artefact to obtain measurement data regarding the artefact, the measuring probe and artefact being moveable relative to each other in at least one machine degree of freedom; and
a hand-held device, moveable in free-space in a plurality of device degrees of freedom, for controlling movement of the measurement probe relative to the artefact, in which the hand-held device comprises at least one motion sensor for sensing movement of the hand-held device in free-space,
in which the apparatus is configured such that the relative movement of the measurement probe and artefact is controlled by said movement of the hand-held device in free-space.

2. An apparatus as claimed in any preceding claim, in which changing the orientation of the hand-held device in a rotational degree of freedom controls the relative movement of the measurement probe and artefact in a linear degree of freedom.

3. An apparatus as claimed in claim 1 or 2, in which a given device degree of freedom is tied to a particular machine degree of freedom, such that movement in that given device degree of freedom controls movement in that particular machine degree of freedom, and in which the machine degree of freedom that the given device degree of freedom is tied to can be changed.

4. An apparatus as claimed in claim 3, in which the machine degree of freedom that a given device degree of freedom is tied to changes automatically depending on the orientation of the device relative to the coordinate positioning machine.

5. An apparatus as claimed in any preceding claim, in which the hand-held device comprises at least one tactile sensor, and in which the apparatus is configured such that the operator can control relative movement of the measurement probe and artefact in at least one machine degree of freedom via the tactile sensor.

6. An apparatus as claimed in any preceding claim, in which the coordinate positioning machine is configured such that the measuring probe and artefact can be moved relative to each other in at least one rotational degree af freedom, and in which the apparatus is configured such that relative movement of the measurement probe and artefact in said at least one rotational degree of freedom can be controlled by movement of the hand-held device in free-space.

7. An apparatus as claimed in any preceding claim, in which the hand-held device comprises a screen for displaying data relating to interactions between the measurement probe and artefact to the operator.

8. An apparatus as claimed in claim 7, in which the hand-held device is configured to display a graphical representation of at least one measured feature of the artefact on the at least one screen.

9. An apparatus as claimed in claims 5 and 7, in which the screen comprises a touch-screen, thereby providing the tactile sensor.

10. An apparatus as claimed in claim 7, 8 or 9 in which the measurement probe comprises a vision probe, and in which the hand-held device is configured to display on the screen a live video-stream from the vision probe, and preferably in which properties of the vision probe can be changed by the operator via the hand-held device.

11. An apparatus as claimed in any preceding claim, in which the at least one motion sensor is an inertia sensor.

12. A method of operating a co-ordinate positioning apparatus comprising a coordinate positioning machine having a measuring probe for interacting with an artefact to obtain measurement data regarding the artefact, and a hand-held device via which an operator can control the relative movement of the measuring probe and artefact, the method comprising:
an operator moving the hand-held device in free-space; and
the relative movement between the measuring probe and artefact changing in response thereto.

13. A hand-held device, movable in free-space in a plurality of device degrees of freedom, comprising at least one motion-sensor, and which is configured to determine and output instructions for effecting relative movement of a measuring probe and an artefact on a coordinate positioning apparatus, based on the output of said at least one motion-sensor.

14. A computer implemented method for controlling the relative movement of a measuring probe and an artefact on a coordinate positioning apparatus, comprising receiving the output from at least one motion sensor in a hand-held device, processing said output to generate instructions for effecting movement of a part of a coordinate positioning apparatus, and outputting said instructions to a controller of the coordinate positioning apparatus.

15. A hand-held device having at least one motion sensor, comprising computer program instructions which when executed perform the method as claimed in claim 14.
